# EUROPÄISCHE PATENTANMELDUNG

(11) **EP 1 004 245 A2**
(43) Veröffentlichungstag der Anmeldung: **31.05.2000**
(21) Anmeldenummer: 99122103.7
(22) Anmeldetag: 05.11.1999
(51) Int. Cl.: A23J 1/08, A23J 7/00, C11B 1/10, C07F 9/10, B01D 11/04

(54) **Verfahren zur Gewinnung insbesondere von Lecithin aus Trockenei**

(30) Priorität: 27.11.1998 DE 19854807
(71) Anmelder: Krupp Uhde GmbH, 44141 Dortmund (DE)
(72) Erfinder: Bork, Michael Dipl.-Ing., 44329 Dortmund (DE)
(74) Vertreter: Patentanwälte Meinke, Dabringhaus und Partner

(57) **Zusammenfassung**

Mit einem Verfahren zur Gewinnung von Wertstoffen aus protein- und fetthaltigen tierischen Rohstoffen, insbesondere zur Gewinnung von Lecithin aus Trockenei, soll eine Lösung geschaffen werden, mit der Wertstoffe in mehreren Schritten extrahiert werden können, wobei insbesondere die Gewinnung von Lecithin im Vordergrund steht.

Dies wird dadurch erreicht, daß der Einsatzstoff mit den Bestandteilen Lipide, Phospholipide (Lecithin) und Proteine einer überkritischen Extraktion mittels eines Lösungsmittels (Solvent) zur Extraktion von Lipiden und Aromastoffen unterworfen wird, wobei die Lipide und Aromastoffe durch Druckabsenkung aus dem überkritischen Lösungsmittel extrahiert werden.

## Beschreibung

Die Erfindung richtet sich auf ein Verfahren zur Gewinnung von Wertstoffen aus protein- und fetthaltigen tierischen Rohstoffen, insbesondere zur Gewinnung von Lecithin aus Trockenei.

Die Extraktion von Lecithin z.B. aus Rohdotter, ist mit Hilfe eines Lösungsmittels bekannt, z.B. mit flüssigem Dimethyläther, wie dies beispielsweise die DE-28 33 371-C3 oder die entsprechende US-4 157 404 beschreibt. Ein ähnliches Verfahren unter Einsatz von unter Normalbedingungen gasförmigen Lösungsmitteln beschreibt auch die DE-32 29 041-A1. Eine im wesentlichen durch Wärmebehandlung gekennzeichnete Verfahrensweise zeigt die US-4 844 926 bzw. US-5 028 449.

Aufgabe der Erfindung ist die Schaffung einer Lösung, mit der Wertstoffe in mehreren Schritten extrahiert werden können, wobei insbesondere die Gewinnung von Lecithin im Vordergrund steht.

Mit einem Verfahren der eingangs bezeichneten Art wird diese Aufgabe gemäß der Erfindung dadurch gelöst, daß der Einsatzstoff mit den Bestandteilen Lipide, Phospholipide (Lecithin) und Proteine einer überkritischen Extraktion mittels eines Lösungsmittels (Solvent) zur Extraktion von Lipiden und Aromastoffen unterworfen wird, wobei die Lipide und Aromastoffe durch Druckabsenkung aus dem überkritischen Lösungsmittel extrahiert werden.

Durch diese letzte Stufe der Verfahrensweise erfolgt eine weitgehende Entfettung des Einsatzstoffes, z.B. des Trockeneies, mit Hilfe des überkritischen Mediums zwischen dem kritischen Druck des Mediums und z.B. 500 bar und zwischen der kritischen Temperatur und beispielsweise 100°C. Dabei kann bei dieser überkritischen Extraktion das Solvent im Kreislauf geführt werden.

Mit dieser Extraktion entsteht als Zwischenprodukt, d.h. als Raffinat, der entfettete Rohstoff mit den Proteinen und den Phospholipiden, die zweckmäßig in dem Extraktionsbehälter verbleiben, wobei der Grat der Entfettung sich nach den Extraktionsparametern und -zeiten variieren läßt.

Als Extrakt können die Lipide und Aromastoffe durch Druckabsenkung aus dem Solventen entnommen werden, wie dies die Erfindung ebenfalls vorsieht.

An dieser Stelle sei bemerkt, daß es aus "Journal of Food Science", Vol. 61, No. 6, 1996, S. 1230 ff., bekannt ist, Sojaflocken mit überkritischem CO₂ und einem Cosolventen zu behandeln. Hinweise auf die Behandlung von tierischen Produkten, die erhebliche Mengen an Proteinen enthalten, lassen sich dieser Literaturstelle nicht entnehmen.

Zweckmäßige Ausgestaltungen der Erfindung ergeben sich aus den Unteransprüchen. Dabei sieht als zweiten Schritt der Verfahrensweise die Erfindung vor, daß der entfettete Einsatzstoff mit den darin enthaltenen Proteinen und Phospholipiden einen weiteren Extraktionsschritt mit überkritischem Lösungsmittel und einem unter Normalbedingungen flüssigen organischen Lösungsmittel als Schleppmittel (Cosolvent) unterworfen wird zur Trennung der Phospholipide von den Proteinen. Als Alternative kann auch vorgesehen sein, daß die Trennung bei einem Druck nahe dem Atmosphärendruck mit Hilfe des Cosolventen als Lösungsmittel vorgenommen wird, wie dies in Ausgestaltung nach der Erfindung ebenfalls vorgesehen ist.

In diesem Schritt können als Raffinat die Proteine aus dem Rohstoff im feuchten Schleppmittel gewonnen werden, als Extrakt bleiben die Phospholipide in Lösung im Schleppmittel.

Zweckmäßig wird dabei das Raffinat durch den überkritischen Solventen getrocknet und steht als Produkt zur Verfügung. Durch Druckabsenkung kann dann der Cosolvent von dem gasförmigen Solventen getrennt werden, der Solvent kann auch hier im Kreislauf geführt werden, der Cosolvent kann gesammelt und wieder dem Prozeß zugeführt werden.

In einem dritten Schritt ist vorgesehen, daß das Extrakt aus Phospholipiden und Cosolventen mit Hilfe des Lösungsmittels konzentriert und aus dem System entfernt wird, wobei die anfallenden Phospholipide als Feststoff ausfallen und von dem überkritischen Medium getrocknet werden. Dieser Schritt kann unter Druck mit dem Solventen im überkritischen oder flüssigen Zustand durchgeführt werden.

Das Cosolvent löst sich bei diesem Schritt im Solventen und kann durch Druckabsenkung, wie erfindungsgemäß auch vorgesehen, vom gasförmigen Solventen getrennt werden, wobei Solvent und Cosolvent getrennt, wie oben schon angegeben, auch hier in den Prozeß zurückführbar sind.

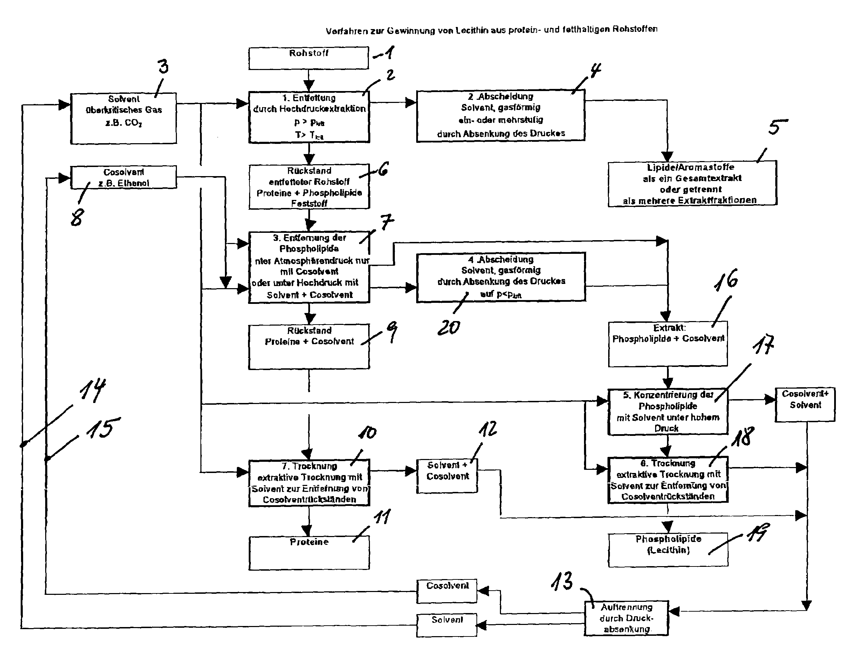

Weitere Merkmale, Einzelheiten und Vorteile der Erfindung ergeben sich aufgrund der nachfolgenden Beschreibung sowie anhand der Zeichnung, die in der einzigen Figur eine Verfahrensdarstellung in Art eines Blockschaltbildes wiedergibt.

Der mit 1 angedeutete Rohstoff wird der ersten Behandlungsstufe 2 zugeführt, in der eine Entfettung durch Hochdruckextraktion vorgenommen wird. Dies geschieht durch Zuführung beispielsweise eines überkritischen Gases als Solvent, was bei 3 angedeutet ist. Nach der Entfettung kann eine Abscheidung 4 beispielsweise durch Absenkung des Druckes erfolgen, so daß sich als Wertstoffe die Lipide und Aromastoffe als ein Gesamtextrakt oder getrennt in mehreren Einzelextraktfraktionen gewinnen lassen, was mit 5 angedeutet ist.

Der im System verbleibende Rückstand, mit 6 angedeutet, wird einer zweiten Behandlungsstufe 7 unterworfen mit wiederum beispielsweise dem überkritischen Solventen aus 3 und/oder einem Cosolventen, z.B. Ethanol, was mit 8 angedeutet ist.

Der sich aus diesem Behandlungsschritt 7 ergebende Rückstand aus Protein und Cosolvent, angedeutet mit 9, wird einer Trocknungsstufe 10 zugeführt, wobei die Trocknung wiederum mit überkritischem Solventen vorgenommen werden kann, als Wertstoff lassen sich die enthaltenen Proteine 11 gewinnen. Hier werden Solvent und Cosolvent gemeinsam, mit 12 angedeutet, einer Auftrennung durch Druck in einer entsprechenden Trennstufe 13 zugeführt und, was mit den Leitungen 14 und 15 angedeutet ist, im Kreislauf im System geführt.

Aus der Behandlungsstufe 7 ergibt sich unmittelbar oder mittelbar ein Extrakt, mit 16 angedeutet, aus Phospholipiden und Cosolventen, der eine weitere Behandlungsstufe 17 folgt, in der die Phospholipide mit dem Solventen unter hohem Druck aufkonzentriert werden. In einer extraktiven Trocknungsstufe 18 können Cosolventrückstände entfernt werden, so daß schließlich der Wertstoff Lecithin bei 19 im System entnommen werden kann.

Die aus der Konzentrierungsstufe 17 stammenden Cosolventen bzw. Solventen werden wiederum der Trennstufe 13 ebenso zugeführt wie die aus der Stufe 18 stammenden Solventen und Cosolventen, um dann über 14 und 15 im System zurückgeführt zu werden.

Der zweiten Stufe 7 kann zur Gewinnung des Extraktes noch eine Solventabscheidungsstufe 20 nachgeschaltet sein, wie dies ebenfalls im Schaubild dargestellt ist.

Natürlich ist das beschriebene Ausführungsbeispiel der Erfindung noch in vielfacher Hinsicht abzuändern, ohne den Grundgedanken zu verlassen, so ist die Erfindung nicht auf die Behandlung von Ei oder Trockenei beschränkt, hier kann beispielsweise auch, entsprechend aufbereitet, Milch oder tierisches Gewebe behandelt werden.

## Patentansprüche

1. Verfahren zur Gewinnung von Wertstoffen aus protein- und fetthaltigen tierischen Rohstoffen, insbesondere zur Gewinnung von Lecithin aus Trockenei,
dadurch gekennzeichnet,
daß der Einsatzstoff mit den Bestandteilen Lipide, Phospholipide (Lecithin) und Proteine einer überkritischen Extraktion mittels eines Lösungsmittels (Solvent) zur Extraktion von Lipiden und Aromastoffen unterworfen wird, wobei die Lipide und Aromastoffe durch Druckabsenkung aus dem überkritischen Lösungsmittel extrahiert werden.

2. Verfahren nach Anspruch 1,
dadurch gekennzeichnet,
daß der entfettete Einsatzstoff mit den darin enthaltenen Proteinen und Phospholipiden einem weiteren Extraktionsschritt mit überkritischem Lösungsmittel und einem unter Normalbedingungen flüsssigen organischen Lösungsmittel als Schleppmittel (Cosolvent) unterworfen wird zur Trennung der Phospholipide von den Proteinen.

3. Verfahren nach Anspruch 1 oder 2,
dadurch gekennzeichnet,
daß das Extrakt aus Phospholipiden und Cosolventen mit Hilfe des Lösungsmittels (Solvent) konzentriert und entfernt wird, wobei die anfallenden Phospholipide als Feststoff ausfallen und von dem überkritischen Medium getrocknet werden.

4. Verfahren nach Anspruch 1 oder einem der folgenden Ansprüche,
dadurch gekennzeichnet,
daß die Lipide und Aromastoffe durch Druckabsenkung aus den Solventen nach der überkritischen Extraktion gewonnen werden.

5. Verfahren nach Anspruch 4,
dadurch gekennzeichnet,
daß die Abscheidung durch einstufige Druckabsenkung (pₛ < pkrit) aus den gesamten Solventen zur Gesamtextraktion aller solventlöslichen Bestandteile vorgenommen wird.

6. Verfahren nach Anspruch 4,
dadurch gekennzeichnet,
daß die Druckabsenkung mehrstufig zur Abscheidung von unterschiedlichen Produkten bei unterschiedlichen Drücken vorgenommen wird (Pₛ1 > pₛ2 >> pₛn).

7. Verfahren nach Anspruch 2 oder einem der folgenden Ansprüche,
dadurch gekennzeichnet,
daß die Trennung der Phospholipide von den Proteinen bei einem drucknahen Atmosphärendruck mit Hilfe des Cosolventen als Lösungsmittel vorgenommen wird.

8. Verfahren nach Anspruch 2 oder einem der folgenden Ansprüche,
dadurch gekennzeichnet,
daß die Trennung der Phospholipide von den Proteinen mit dem überkritischen Lösungsmittel (Solvent) zusammen mit dem Cosolventen als überkritische Schleppmittelextraktion unter Hochdruck vorgenommen wird.

9. Verfahren nach Anspruch 8,
dadurch gekennzeichnet,
daß ein Schleppmittelanteil bei der überkritischen Extraktion zwischen 0 und 20 % eingesetzt wird.

10. Verfahren nach Anspruch 8 oder 9,
dadurch gekennzeichnet,
daß die Phospholipide zusammen mit dem Schleppmittel durch Druckabsenkung (pₛ < pkrit) vom Solventen abgetrennt werden, derart, daß sie als Lösung im Cosolventen anfallen.

11. Verfahren nach Anspruch 3 oder einem der folgenden Ansprüche,
dadurch gekennzeichnet,
daß das im Lösungsmittel (Solvent) gelöste Schleppmittel (Cosolvent) durch Druckabsenkung voneinander getrennt und jeweils im Kreislauf im System geführt wird.

12. Verfahren nach einem der vorangehenden Ansprüche, insbesondere zur Gewinnung von Lecithin aus Eigelb,
dadurch gekennzeichnet,
daß als Lösungsmittel (Solvent) CO₂ und als Schleppmittel (Cosolvent) insbesondere Ethanol oder Hexan eingesetzt werden.

13. Verfahren nach Anspruch 12,
dadurch gekennzeichnet,
daß im ersten überkritischen Extraktionsschritt als Zwischenprodukt entfettetes Eigelb sowie als Extrakt Eieröl gewonnen wird.

14. Verfahren nach Anspruch 13,
dadurch gekennzeichnet,
daß der in diesem Schritt anfallende Extrakt als Eieröl in eine lipidreiche und eine aromareiche Fraktion aufgetrennt wird.

15. Verfahren nach Anspruch 13 oder 14,
dadurch gekennzeichnet,
daß die als Raffinat anfallenden Proteine des zweiten Extraktionsschrittes als Eigelbproteine bereitgestellt werden.

16. Verfahren nach einem der Ansprüche 12 bis 15,
dadurch gekennzeichnet,
daß die nach Konzentrierung und Trocknung des dritten Schrittes anfallenden Phospholipide als Hauptprodukt Lecithin dem Prozeß entnommen werden.

17. Verfahren nach Anspruch 16,
dadurch gekennzeichnet,
daß die Zusammensetzung, d.h. der Gehalt an Phospholipiden, durch die Steuerungsparameter der im ersten Schritt vorgenommenen überkritischen Extraktion variiert wird.
